# FASCICULE DE BREVET EUROPEEN

(11) **EP 1 770 841 B1**
(45) Date de publication et mention de la délivrance du brevet: **07.09.2011**
(21) Numéro de dépôt: 06300999.7
(22) Date de dépôt: 29.09.2006
(51) Int. Cl.: H02G 15/34

(54) **Dispositif d'alimentation en courant électrique d'un appareil supraconducteur sous moyenne ou haute tension**
Stromversorgungsvorrichtung für einen supraleitenden Apparat unter Hoch- oder Mittelspannung
Device for supplying electrical power to a superconducting apparatus under medium or high voltage

(30) Priorité: 30.09.2005 FR 0552981
(43) Date de publication de la demande: 04.04.2007
(73) Titulaire: Nexans, 75008 Paris (FR)
(72) Inventeur: Mirebeau, Pierre, 91140 Villebon s/Yvette (FR); Lallouet, Nicolas, 62132 Fiennes (FR)
(74) Mandataire: Feray, Valérie

(56) Documents cités:
- EP-A- 0 780 926

## Description

La présente invention concerne un dispositif d'alimentation en courant électrique d'un appareil supraconducteur sous moyenne ou haute tension, l'intensité du courant électrique pouvant être élevée.

Un élément ou appareil supraconducteur contenu dans un cryostat rempli d'un liquide cryogénique peut transporter des courants électriques de forte intensité sans perte par effet Joule. Cependant, pour fournir à l'élément supraconducteur un courant électrique de forte intensité, il peut être nécessaire de l'alimenter sous moyenne ou haute tension. Par la suite et pour décrire la présente invention, on désignera par moyenne ou haute tension des tensions supérieures à environ 50 kV.

Amener le courant électrique depuis une source de courant située à l'air libre, et donc à température ambiante, à l'élément supraconducteur situé dans un cryostat, donc à température cryogénique, est effectué par l'utilisation d'un dispositif appelé "traversée", qui comporte principalement un conducteur électrique central entouré d'une gaine isolante. Une traversée doit, sur une longueur raisonnable, effectuer la transition de température tout en s'assurant que les pertes par conduction thermique sont faibles pour éviter qu'un flux de chaleur trop important soit transmis dans le liquide cryogénique et favorise sont ébullition. De plus, la traversée doit pouvoir transporter un courant électrique d'intensité élevée et supporter une haute tension.

Pour alimenter un élément supraconducteur en courant électrique, il faut utiliser une traversée pour entrer le courant et une autre traversée pour sortir le courant. Si la tension d'alimentation est élevée, il existe un risque de décharge électrique entre les deux extrémités situées à l'air libre des deux traversées. En d'autres termes, le champ électrique entre ces deux extrémités peut devenir suffisamment élevé pour conduire à la formation d'un arc électrique entre les deux extrémités situées dans l'air ou à un "claquage" de l'air. Ce phénomène se présente essentiellement lorsqu'un défaut dans l'élément supraconducteur survient, ou que sa capacité de transport de courant est dépassée par exemple lors d'un surcourant dans le réseau. Dans ce cas, la continuité électrique entre les deux traversées est au moins temporairement rompue imposant que l'une des traversées reste à un potentiel haute tension tandis que l'autre se retrouve au potentiel proche de celui de la terre. Eloigner les deux traversées d'une distance suffisante pour éviter la formation d'un claquage, par exemple de plusieurs mètres, n'est pas envisageable du fait des contraintes dimensionnelles imposées au cryostat contenant l'élément supraconducteur. En effet, la taille du cryostat est limitée pour des raisons de coûts, aussi bien de construction que de fonctionnement. La présente invention propose un dispositif permettant d'éviter l'apparition d'une décharge électrique.

Un autre problème, lié à une alimentation en courant électrique qui peut être de forte intensité et sous haute tension, est l'élévation locale de température du fluide cryogénique, et donc la formation de gaz, qui peut être due à un défaut de l'élément supraconducteur ou plus simplement à la nature de cet élément. Par exemple, si l'élément supraconducteur est un limiteur de courant immergé dans de l'azote liquide, le limiteur de courant cesse d'être supraconducteur si l'intensité du courant le traversant dépasse un certain seuil. Un échauffement du limiteur de courant se produit alors par effet Joule, ce qui conduit localement à l'ébullition de l'azote liquide et donc à la formation de bulles de gaz d'azote. L'azote sous forme gazeuse étant beaucoup moins isolant électriquement que sous forme liquide, une décharge électrique peut alors se produire à l'intérieur même du cryostat, par exemple entre les deux extrémités des deux traversées situées dans le cryostat. Un mode de réalisation de la présente invention apporte une solution à ce problème.

De façon plus précise, la présente invention concerne un dispositif pour l'alimentation en courant électrique et sous moyenne ou haute tension d'un appareil supraconducteur contenu dans un cryostat comprenant un liquide cryogénique, le dispositif comportant deux traversées électriques comprenant chacune un conducteur électrique central ainsi qu'une première borne de connexion située hors du cryostat et une deuxième borne située dans le cryostat, les premières bornes des traversées étant destinées à être reliées à une source de courant électrique sous moyenne ou haute tension et les deuxièmes bornes des traversées étant destinées à être reliées à l'appareil supraconducteur.

Le document de brevet EP 0 780 926 décrit un tel dispositif.

Selon l'invention, la distance séparant les premières bornes de connexion est supérieure à la distance séparant les deuxièmes bornes de connexion, lesdites distances étant suffisantes pour éviter une décharge électrique d'une part entre les premières bornes et d'autre part entre les deuxièmes bornes.

Selon le mode de réalisation préféré, les conducteurs électriques ont une forme sensiblement rectiligne et au moins l'un des conducteurs est incliné par rapport à la verticale.

Selon un autre mode de réalisation, les conducteurs électriques des traversées ont une forme sensiblement rectiligne, l'un des conducteurs étant incliné d'un angle +α par rapport à la verticale et l'autre étant incliné d'un angle -α par rapport à la verticale. Les conducteurs électriques peuvent être contenus sensiblement dans un même plan.

De façon avantageuse, chacune des traversées comporte successivement une enceinte à température intermédiaire entre la température ambiante et la température cryogénique et une enceinte à température ambiante, ledit conducteur central traversant lesdites enceintes et étant entouré d'une gaine électriquement isolante.

De préférence, un écran électriquement conducteur, relié au potentiel de la terre, entoure la gaine isolante sur une section s'étendant depuis sensiblement la deuxième borne de connexion de la traversée jusqu'à au moins la jonction entre l'enceinte intermédiaire et l'enceinte à température ambiante.

Selon un autre mode de réalisation, le cryostat comporte un renflement dans sa partie supérieure, le renflement étant situé plus haut que les deuxièmes bornes. Le gaz éventuellement présent dans le liquide cryogénique peut remonter dans le liquide et se localiser alors dans le renflement pour éventuellement former une poche de gaz.

Le cryostat peut comporter une vanne de sécurité située au-dessus du renflement, cette vanne s'ouvrant lorsque la pression du gaz éventuellement présent dans le renflement dépasse une valeur prédéterminée.

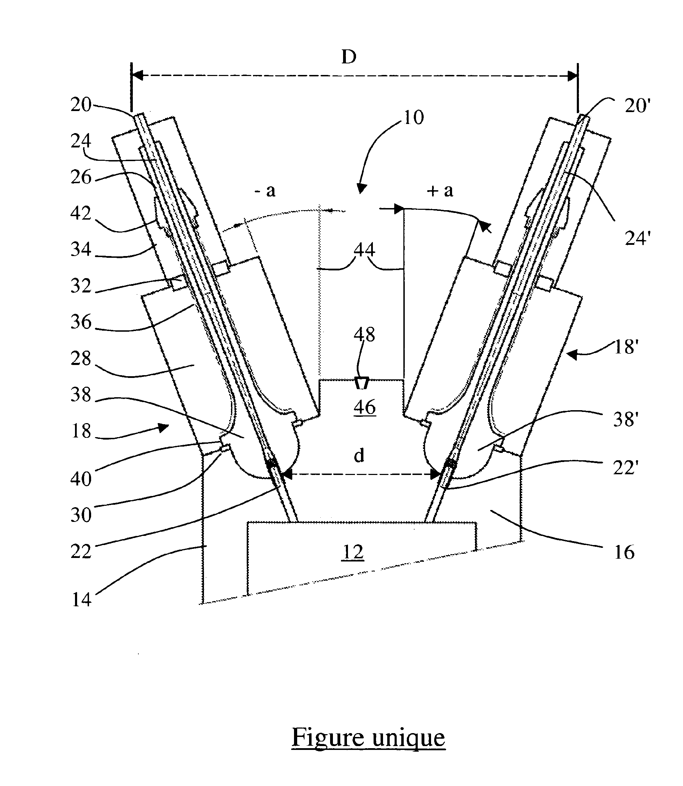

D'autres caractéristiques et avantages de l'invention ressortiront de la description suivante, donnée uniquement à titre d'exemple et faite en référence au dessin de la figure unique qui représente un mode de réalisation de l'invention.

On remarquera tout d'abord que la valeur du champ électrique conduisant à une décharge électrique est beaucoup plus élevée dans le liquide cryogénique que dans l'air. A titre d'exemple, si ce liquide est de l'azote, la tension de claquage est d'environ 30 à 40 kV/mm comparée à environ 1 kV/mm pour l'air (valeur variant selon plusieurs facteurs dont la température et l'humidité de l'air). De plus, le liquide cryogénique est sous pression dans le cryostat, à environ 3 bars, ce qui augmente la tension de claquage dans l'azote liquide à une valeur voisine de 60 kV/mm. La formation d'une décharge électrique entre les extrémités des traversées situées dans l'air est donc beaucoup plus susceptible de se produire qu'entre les extrémités des traversées situées dans le liquide cryogénique. La distance séparant ces deux extrémités dans l'azote liquide est généralement dictée par les dimensions de l'appareil supraconducteur et de toute façon imposée par les dimensions internes du cryostat. Mais puisque la tension de claquage dans l'azote liquide est bien plus élevée que la tension de claquage dans l'air, cette distance n'est généralement pas critique. Cependant il n'en est pas de même de la distance séparant les deux extrémités des traversées situées dans l'air. Cette distance doit donc être augmentée, dans certaines limites imposées par un encombrement acceptable.

La figure unique représente un mode de réalisation d'un dispositif 10 pour l'alimentation en courant électrique, sous moyenne ou haute tension, d'un appareil supraconducteur 12 contenu dans un cryostat 14 comprenant un liquide cryogénique. Ce liquide est généralement de l'azote liquide à une température de l'ordre de -200 °C. Le cryostat 14 comporte de façon classique une paroi externe et une paroi interne, laquelle délimite un espace 16 contenant le liquide cryogénique. Cet espace est donc à la température cryogénique, ce qui pour les supraconducteurs dits "haute température" est de l'ordre de -200°C. Un vide, de l'ordre par exemple de 10 ⁻⁵ mbar, règne entre les deux parois du cryostat.

L'appareil 12 peut être de différents types, tels qu'un limiteur de courant ou un testeur par exemple. L'appareil 12 est refroidi par l'azote liquide de façon à ce qu'il se trouve dans un état de supraconductivité.

Le dispositif 10 comporte deux traversées électriques 18 et 18', l'une servant pour l'entrée du courant électrique dans le cryostat et l'autre servant pour la sortie du courant hors du cryostat. Chaque traversée comporte à l'une de ses deux extrémités une première borne de connexion 20 ou 20' située hors du cryostat à l'air libre et à son autre extrémité une deuxième borne de connexion 22 ou 22' située dans le cryostat. Les premières bornes 20 et 20' sont reliées à une alimentation électrique et les deuxièmes bornes 22 et 22' sont reliées à l'appareil 12.

Les traversées 18 et 18' étant identiques, seule la traversée 18 va être décrite en détails.

A titre d'exemples, deux modes de réalisation de traversées adaptés à la moyenne et haute tension et à des courant qui peuvent être forts sont décrits dans les demandes de brevet FR 05 50694 et FR 05 50695 déposées par la demanderesse le 17 mars 2005.

La traversée électrique 18 se compose d'un conducteur central 24, en alliage d'aluminium ou en cuivre, entouré d'une gaine électriquement isolante 26 réalisée par exemple en époxy. L'extrémité inférieure du conducteur central 24 située dans le cryostat 14 constitue la deuxième borne de connexion 22. L'extrémité supérieure du conducteur central forme la première borne de connexion 20.

Une enceinte intermédiaire 28, adjacente au cryostat 14, est de préférence remplie au moins partiellement d'un matériau solide à faible conductivité thermique. Ce matériau peut être sous forme de mousse, telle qu'une mousse au polyuréthane ou une mousse de verre cellulaire, par exemple disponible commercialement sous la marque Foamglass. Le conducteur central 24 et la gaine 26 traversent la paroi inférieure de l'enceinte intermédiaire 28 par une bride de fixation étanche 30 et la paroi supérieure par une bride de fixation étanche 32. Au dessus de cette fixation 32, le conducteur central et la gaine sont contenus dans une enceinte à température ambiante 34. Le conducteur central 24 sort en haut de l'enceinte 34 pour former la première borne de connexion 20. L'enceinte intermédiaire se trouve à une température comprise entre la température du fluide cryogénique et la température ambiante.

Un écran électriquement conducteur 36, de préférence métallique, enserre la gaine isolante 26 sur au moins une section de gaine, c'est-à-dire sur une certaine longueur. Cet écran est avantageusement réalisé par métallisation de la gaine isolante sur ladite section. Le métal déposé sur cette paroi externe peut être par exemple du zinc, pulvérisé sur la paroi externe de la gaine. L'écran 36 s'étend depuis le bas de l'enceinte intermédiaire 28, légèrement au dessus de la bride de fixation 30, jusqu'à au moins la bride 32, c'est-à-dire la jonction entre l'enceinte intermédiaire 28 avec l'enceinte à température ambiante 34. L'écran est électriquement connecté au potentiel de la terre. Il a pour fonction de confiner le champ électrique le long du conducteur central 24 dans la traversée électrique uniquement, et plus précisément entre le conducteur central 24 et l'écran 36.

La gaine isolante 26 se termine à son extrémité inférieure par un bulbe 38 comprenant une collerette de fixation 40. La partie du bulbe située au dessus de la collerette 40 a une forme évasée, la partie la plus évasée étant au niveau de la collerette. La bride 30 fixe de façon étanche la collerette 40 du bulbe 38, et donc la gaine 26, sur la paroi interne du cryostat 14. L'écran 36 recouvre la forme évasée du bulbe 38 jusqu'à la collerette 40.

La paroi latérale de l'enceinte à température ambiante 34 est constituée d'un isolant électrique, par exemple une époxy renforcée par des fibres de verre, désignée habituellement par FRP (abréviation de "Fiber Reinforced Polymer"). La surface externe de cette paroi comporte une succession d'ailettes (non représentées) en matériau isolant, par exemple en silicone, destinées à allonger le parcours d'un courant de fuite éventuel en surface. L'enceinte à température ambiante 34 est remplie d'un liquide bon isolant électrique, tel que de l'huile silicone. En plus d'assurer une bonne isolation électrique du conducteur central 24, le liquide isolant facilite la stabilisation thermique de l'enceinte à température ambiante.

Un cône de contrainte 42, situé dans l'enceinte 34 à température ambiante, entoure la gaine 26 au niveau de l'arrêt de l'écran 36. Le cône de contrainte 42 comporte une partie conductrice, laquelle est reliée électriquement à l'écran ainsi qu'à la bride de fixation étanche 32, électriquement conductrice, par l'intermédiaire par exemple d'un enrubannage de rubans semi-conducteurs. L'écran 36 peut être arrêté au niveau de la bride de fixation 32 ou, comme représenté sur la figure unique, être prolongé directement jusqu'à la partie conductrice du cône de contrainte 42, l'essentiel étant d'avoir une bonne continuité électrique entre l'écran 36 et la partie conductrice du cône de contrainte. La fonction de ce cône de contrainte est de dévier ou d'évaser les lignes de champ électrique au niveau de l'arrêt de l'écran afin d'éviter une discontinuité qui pourrait conduire à un claquage électrique.

Selon la présente invention, la distance D séparant les deux premières bornes de connexion 20 et 20' situées dans l'air est supérieure à la distance d séparant les deux deuxièmes bornes de connexion situées dans le liquide cryogénique. De plus, les distances D et d doivent être supérieures aux distances pour lesquelles se produit une décharge électrique entre respectivement les deux premières et deuxièmes bornes de connexion. La valeur minimale de la distance D dépend bien entendu des conditions limites, atmosphériques et électriques, dans lesquelles le dispositif doit être utilisé, telles que la température et l'humidité de l'air et les valeurs maximales de courant électrique et de tension à appliquer à l'appareil supraconducteur. La distance D est choisie, pour une valeur de tension électrique donnée, de telle sorte que le champ électrique créé entre lesdites premières bornes 20 et 20' soit inférieur à 1 kVolt/mm.

Plusieurs modes de réalisation sont possibles pour obtenir ce résultat. Par exemple, lorsque les conducteurs centraux 24 et 24' sont rectilignes, ce qui est le cas du mode de réalisation représenté sur la figure unique, au moins l'une des traversées 18 et 18' est inclinée d'un angle a par rapport à une direction verticale 44. De façon avantageuse, les deux traversées sont inclinées par rapport à la verticale, la traversée 18 étant inclinée d'un angle -a et la traversée 18' d'un angle +a. L'angle a d'inclinaison peut être compris entre 5° et 90°. On pourrait en effet envisager un mode de réalisation selon lequel l'une des traversées serait en haut du cryostat et l'autre traversée sur le côté, les deux traversées étant alors sensiblement perpendiculaires. Les deux conducteurs centraux 24 et 24', et par extension les deux traversées 18 et 18', peuvent être contenus dans un même plan. C'est le cas du mode de réalisation représenté, ce plan étant celui du dessin.

Le cryostat 14 comporte de préférence un renflement 46 dans sa partie supérieure. Ce renflement est situé au dessus des deuxièmes bornes 22 et 22' et entre ces bornes Si des bulles de gaz se forment dans le cryostat, le gaz montera à la surface du liquide cryogénique et viendra s'accumuler dans le renflement 46, formant ainsi une poche de gaz. La formation de gaz vient généralement de l'ébullition du liquide cryogénique, suite à un échauffement par effet Joule de l'appareil supraconducteur 12. Cet échauffement peut être localisé, par exemple autour des deuxièmes bornes de connexion 22 et 22'. Il se forme alors des bulles de gaz qui remontent dans le liquide pour finalement être piégées dans le renflement 46. L'inclinaison a des traversées favorise la remontée de ces bulles. Si les traversées étaient en position verticale, les bulles de gaz auraient tendance à s'accumuler autour des bornes 22 et 22' et de la partie inférieure des bulbes 38 et 38'. On évite ainsi l'accumulation de bulles dans le liquide, notamment autour des deuxièmes bornes 22 et 22', empêchant ainsi une décharge électrique dans le liquide cryogénique. On remarquera que l'emplacement du renflement 46, au dessus des traversées 18 et 18' et entre celles-ci, ne gêne en rien le fonctionnement du dispositif et du cryostat. De plus, le renflement 46 peut être avantageusement rempli de liquide cryogénique au début de l'utilisation du cryostat, ce qui augmente la masse thermique de l'ensemble.

Une vanne de sécurité 48, tarée à une pression de seuil prédéterminée, s'ouvre automatiquement lorsque la pression du gaz dans le renflement 46 dépasse la pression de seuil. Cette vanne peut être remplacée par un disque de rupture comportant une membrane qui se déchire lorsque la pression du gaz atteint la pression de seuil.

D'autres modes de réalisation que ceux décrits et représentés peuvent être conçus par l'homme du métier sans sortir du cadre de la présente invention. Par exemple, les traversées pourraient avoir une forme courbée, donc non rectiligne. De même, le mode de réalisation des traversées 18 et 18' n'est qu'un exemple de réalisation et d'autres modes de réalisation peuvent être utilisés, dans la mesure où les traversées sont capables de supporter des moyennes ou hautes tensions électriques.

## Revendications

1. Dispositif (10) pour l'alimentation en courant électrique, sous moyenne ou haute tension, d'un appareil supraconducteur (12) contenu dans un cryostat (14) comprenant un liquide cryogénique, le dispositif comportant deux traversées électriques (18, 18') comprenant chacune un conducteur électrique central (24, 24') ainsi qu'une première borne de connexion (20, 20') située hors du cryostat et une deuxième borne (22, 22') située dans le cryostat, les premières bornes (20, 20') desdites traversées étant destinées à être reliées à une source de courant électrique sous moyenne ou haute tension et les deuxièmes bornes (22, 22') desdites traversées étant destinées à être reliées audit appareil (12), ledit dispositif étant **caractérisé en ce que** la distance D séparant lesdites premières bornes de connexion est supérieure à la distance d séparant lesdites deuxièmes bornes de connexion, lesdites distances. D et d étant suffisantes pour éviter une décharge électrique d'une part entre lesdites premières bornes (20, 20') et d'autre part entre lesdites deuxièmes bornes (22, 22').

2. Dispositif selon la revendication 1 **caractérisé en ce que**, lesdits conducteurs électriques (24, 24') étant de forme sensiblement rectiligne, au moins l'un desdits conducteurs est incliné par rapport à la verticale (44).

3. Dispositif selon la revendication 2 **caractérisé en ce que** l'angle d'inclinaison a formé par ledit conducteur avec la verticale est un angle compris entre 5° et 90°.

4. Dispositif selon l'une des revendications 2 et 3 **caractérisé en ce que** l'un (24') des conducteurs est incliné d'un angle +a par rapport à la verticale et l'autre (24) est incliné d'un angle -a par rapport à la verticale.

5. Dispositif selon l'une des revendications 2 à 4 **caractérisé en ce que** lesdits conducteurs électriques (24, 24') sont contenus sensiblement dans un même plan.

6. Dispositif selon l'une des revendications précédentes **caractérisé en ce que**, lesdites premières bornes de connexion (20, 20') étant situées dans l'air, la distance D séparant lesdites premières bornes est choisie, pour une valeur de tension donnée, de telle sorte que le champ électrique créé entre lesdites premières bornes soit inférieur à 1.000 Volts/mm.

7. Dispositif selon l'une des revendications précédentes **caractérisé en ce que**, lesdites premières (20, 20') et deuxièmes (22, 22') bornes étant à température respectivement ambiante et cryogénique, chacune desdites traversées (18, 18') comporte successivement une enceinte (28) à température intermédiaire entre la température ambiante et la température cryogénique et une enceinte (34) à température ambiante, ledit conducteur central (24) traversant lesdites enceintes et étant entouré d'une gaine électriquement isolante (26).

8. Dispositif selon la revendication 7 **caractérisé en ce que** ladite enceinte à température intermédiaire (28) est remplie d'un matériau solide à faible conductivité thermique.

9. Dispositif selon l'une des revendications 7 et 8 **caractérisé en ce qu'**un écran (36), électriquement conducteur et relié au potentiel de la terre, entoure ladite gaine isolante (26) sur une section s'étendant depuis sensiblement ladite deuxième borne de connexion (22) jusqu'à au moins la jonction (32) entre l'enceinte à température intermédiaire et l'enceinte à température ambiante.

10. Dispositif selon l'une des revendications précédentes **caractérisé en ce que** ledit cryostat (14) comporte un renflement (46) dans sa partie supérieure, ledit renflement étant situé plus haut que lesdites deuxièmes bornes (22, 22'), le gaz éventuellement présent dans ledit liquide cryogénique remontant dans ledit liquide et se localisant dans ledit renflement pour éventuellement former une poche de gaz.

11. Dispositif selon la revendication 10 **caractérisé en ce que** ledit renflement (46) est situé entre lesdites traversées (18, 18').

12. Dispositif selon l'une des revendications 10 et 11 **caractérisé en ce que** ledit cryostat (14) comporte une vanne de sécurité (48) située sur le dessus dudit renflement (46), ladite vanne s'ouvrant lorsque la pression du gaz éventuellement présent dans ledit renflement dépasse une valeur de seuil prédéterminée.

## Claims

1. A device (10) for supplying electrical power under medium or high voltage to a superconducting apparatus (12) contained in a cryostat (14) comprising a cryogenic liquid, the device including two electrical feedthroughs (18, 18'), each comprising a central electrical conductor (24, 24) as well as a first connection terminal (20, 20') located outside the cryostat and a second terminal (22, 22') located in the cryostat, the first terminals (20, 20') of said feedthroughs being intended to be connected to a medium or high voltage electrical power source and the second terminals (22, 22') of said feedthroughs being intended to be connected to said apparatus (12), said device being **characterized in that** the distance D separating said first connection terminals is greater than the distance d separating said second connection terminals, said distances D and d being sufficient for avoiding an electrical discharge between said first terminals (20, 20') on the one hand and between said second terminals (22, 22') on the other hand.

2. The device according to claim 1, **characterized in that**, said electrical conductors (24, 24') being of a substantially rectilinear shape, at least one of said conductors is tilted relatively to the vertical (44).

3. The device according to claim 2, **characterized in that** the tilt angle a formed by said conductor with the vertical is an angle comprised between 5° and 90°.

4. The device according to one of claims 2 and 3, **characterized in that** one (24') of the conductors is tilted by an angle +a relatively to the vertical and the other one (24) is tilted by an angle -a relatively to the vertical.

5. The device according to one of claims 2 to 4, **characterized in that** said electrical conductors (24, 24') are substantially contained in a same plane.

6. The method according to one of the preceding claims, **characterized in that**, said first connection terminals (20, 20') being located in air, the distance D separating said first terminals is selected for a given voltage value, so that the electrical field generated between said first terminals is less than 1,000 volts/mm.

7. The device according to one of the preceding claims, **characterized in that**, said first (20, 20') and second (22, 22') terminals being at room and cryogenic temperatures respectively, each of said feedthroughs 18, 18') successively includes an enclosure (28) at an intermediate temperature between room temperature and the cryogenic temperature, and an enclosure (34) at room temperature, said central conductor (24) crossing said enclosures and being surrounded by an electrically insulating sheath (26).

8. The device according to claim 7, **characterized in that** said enclosure at an intermediate temperature (28) is filled with a solid material having low heat conductivity.

9. The device according to one of claims 7 and 8, **characterized in that** an electrically conducting screen (36) connected to the potential of the earth, surrounds said insulating sheath (26) over a section extending substantially from said second connection terminal (22) as far as at least the junction (32) between the intermediate temperature enclosure and the room temperature enclosure.

10. The device according to one of the preceding claims, **characterized in that** said cryostat (14) includes a bulge (46) in its upper portion, said the bulge being located higher than said second terminals (22, 22'), the gas possibly present in said cryogenic liquid flowing upwards in said liquid and being localized in said bulge in order to possibly form a gas pocket.

11. The device according to claim 10, **characterized in that** said bulge (46) is located between said feedthroughs (18, 18').

12. The device according to one of claims 10 and 11, **characterized in that** said cryostat (14) includes a safety valve (48) located on the top of said bulge (46), said valve opening when the pressure of the gas possibly present in said bulge exceeds a predetermined threshold value.

## Patentansprüche

1. Stromversorgungsvorrichtung (10) für einen supraleitenden Apparat (12) unter Mittel- oder Hochspannung in einem Kryostat (14), das eine Kühlflüssigkeit umfasst, wobei die Vorrichtung zwei elektrische Überführungen (18, 18') umfasst, von denen jede einen zentralen elektrischen Leiter (24, 24') sowie eine erste Anschlussklemme (20, 20') außerhalb des Kryostats und eine zweite Klemme (22, 22') im Kryostat umfasst, wobei die ersten Klemmen (20, 20') der Überführungen dazu bestimmt sind, mit einer Stromquelle unter Mittel- oder Hochspannung verbunden zu sein und die zweiten Klemmen (22, 22') der Überführungen dazu bestimmt sind, mit dem Apparat (12) verbunden zu sein, wobei die Vorrichtung **dadurch gekennzeichnet ist, dass** der Abstand D, der die ersten Anschlussklemmen trennt, größer ist als der Abstand d, der die zweiten Anschlussklemmen trennt, wobei die Abstände D und d ausreichend sind, um eine elektrische Entladung einerseits zwischen den ersten Klemmen (20, 20') und andererseits zwischen den zweiten Klemmen (22, 22') zu vermeiden.

2. Vorrichtung nach Anspruch 1, **dadurch gekennzeichnet, dass** die elektrischen Leiter (24, 24') etwa gerade geformt sind, wobei mindestens einer der Leiter im Verhältnis zur Vertikalen (44) geneigt ist.

3. Vorrichtung nach Anspruch 2, **dadurch gekennzeichnet, dass** der von dem Leiter mit der Vertikalen gebildete Neigungswinkel a ein Winkel zwischen 5° und 90° inklusive ist.

4. Vorrichtung nach einem der Ansprüche 2 und 3, **dadurch gekennzeichnet, dass** einer (24') der Leiter in einem Winkel +a im Verhältnis zur Vertikalen und der andere (24) in einem Winkel -a im Verhältnis zur Vertikalen geneigt ist.

5. Vorrichtung nach einem der Ansprüche 2 bis 4, **dadurch gekennzeichnet, dass** die elektrischen Leiter (24, 24') etwa in derselben Ebene enthalten sind.

6. Vorrichtung nach einem der vorangehenden Ansprüche, **dadurch gekennzeichnet, dass**, wobei sich die ersten Anschlussklemmen (20, 20') in der Luft befinden, der Abstand D, der die ersten Klemmen trennt, für einen gegebenen Spannungswert derart ausgewählt ist, dass das zwischen den ersten Klemmen erzeugte elektrische Feld kleiner als 1.000 Volt/mm ist.

7. Vorrichtung nach einem der vorangehenden Ansprüche, **dadurch gekennzeichnet, dass**, wobei die ersten (20, 20') und zweiten (22, 22') Klemmen in Raum- und Kühltemperatur sind, jede der Überführungen (18, 18') nacheinander einen Raum (28) mit Übergangstemperatur zwischen der Raumtemperatur und der Kühltemperatur aufweist und einen Raum (34) mit Raumtemperatur, wobei der zentrale Leiter (24) die Räume durchquert und von einer elektrisch isolierenden Hülle (26) umgeben ist.

8. Vorrichtung nach Anspruch 7, **dadurch gekennzeichnet, dass** der Raum mit Übergangstemperatur (28) mit einem massiven Material mit geringer thermischer Leitfähigkeit gefüllt ist.

9. Vorrichtung nach einem der Ansprüche 7 und 8, **dadurch gekennzeichnet, dass** ein elektrisch leitender und mit dem Erdpotential verbundener Schirm (36) die isolierende Hülle (26) über einen Abschnitt umgibt, der sich etwa ab der zweiten Anschlussklemme (22) bis mindestens zur Verbindung (32) zwischen dem Raum mit Übergangstemperatur und dem Raum mit Raumtemperatur erstreckt.

10. Vorrichtung nach einem der vorangehenden Ansprüche, **dadurch gekennzeichnet, dass** das Kryostat (14) in seinem oberen Abschnitt eine Verdickung (46) aufweist, wobei sich die Verdickung höher befindet als die zweiten Klemmen (22, 22'), wobei das Gas, das eventuell in der Kühlflüssigkeit vorhanden ist, in der Flüssigkeit aufsteigt und sich in der Verdickung lokalisiert, um eventuell eine Gasblase zu bilden.

11. Vorrichtung nach Anspruch 10, **dadurch gekennzeichnet, dass** sich die Verdickung (46) zwischen den Übergängen (18, 18') befindet.

12. Vorrichtung nach einem der Ansprüche 10 und 11, **dadurch gekennzeichnet, dass** das Kryostat (14) ein Sicherheitsventil (48) aufweist, das sich über der Verdickung (46) befindet, wobei sich das Ventil öffnet, wenn der Druck des eventuell in der Verdickung enthaltenen Gases einen vorbestimmten Grenzwert überschreitet.
